# EUROPEAN PATENT SPECIFICATION

(11) **EP 3 441 745 B1**
(45) Date of publication and mention of the grant of the patent: **07.04.2021**
(21) Application number: 17778886.6
(22) Date of filing: 23.02.2017
(51) Int. Cl.: G01N 17/04

(54) **CORROSIVE ENVIRONMENT MONITORING DEVICE**
VORRICHTUNG ZUR ÜBERWACHUNG VON KORROSIVEN UMGEBUNGEN
DISPOSITIF DE SURVEILLANCE D'ENVIRONNEMENT CORROSIF

(30) Priority: 08.04.2016 JP 2016077716
(43) Date of publication of application: 13.02.2019
(73) Proprietor: Hitachi, Ltd., Tokyo 100-8280 (JP)
(72) Inventor: MINAMITANI, Rintarou, Tokyo 100-8280 (JP)
(74) Representative: MERH-IP Matias Erny Reichl Hoffmann Patentanwälte PartG mbB
(86) International application number: PCT/JP2017/006835
(87) International publication number: WO 2017/175507

(56) References cited:
- WO-A1-2013/042179
- CN-U- 202 533 402
- JP-A- 2008 281 499
- JP-A- 2008 304 212
- JP-A- 2013 190 241
- JP-A- 2013 190 241
- US-A1- 2012 038 377
- US-A1- 2013 265 064

## Description

### Technical Field

The present invention relates to a corrosive environment monitoring device for an indoor environment, mainly an environment where an electrical/electronic device is installed, which measures the degree of corrosion due to a corrosive gas present in the environment.

### Background Art

An electrical/electronic device is required to provide long-term reliability in order to enable an intended apparatus to operate stably. In addition, for higher speed and space saving, many electrical/electronic components which adopt a high-density packaging structure and include a micro-wiring structure or thin film plating structure are mounted. In these electrical/electronic components, minor corrosion damage may change the electric characteristics or magnetic characteristics and cause a failure or malfunctioning, so suppression of corrosion damage is an issue to be tackled from the viewpoint of the reliability of electrical/electronic devices. In order for anticorrosion measures depending on the degree of corrosiveness of the environment to be reflected in design and maintenance, it is necessary to evaluate the corrosiveness of the installation environment of an electrical/electronic device easily, quickly, accurately and continuously. Also, for the electrical/electronic device, the device which diagnoses the corrosiveness of the environment is also expected to be compact and lightweight for space saving.

With this background, as a method for evaluating the corrosiveness of the installation environment of an electrical/electronic device, a method for evaluating the degree of corrosion of copper, silver, aluminum, iron, and zinc which are exposed for a given period is usually used according to the ISO11844-1 standards. It is known that copper, silver, aluminum, iron, and zinc corrode with any of corrosive gases such as SO₂, NO₂, and H₂S though the degree of influence differs. In the ISO standards, the degree of corrosion of metal exposed for one year is quantified by gravimetry or the corrosion product of an exposed metal is quantified by electrochemical measurement.

As another method for evaluating the corrosiveness of the installation environment, ASHRAE (American Society of Heating Refrigerating and Air Conditioning Engineering, Inc.) has issued guidelines which evaluate the corrosiveness of data center installation environments (ASHRAE TC9.9, 2011 Gaseous and Particulate Contamination Guidelines for Data Centers). According to the ASHRAE guidelines, the degree of corrosion of metal exposed for one month is quantified by electrochemical measurement.

Furthermore, as the background art in this technical field, PTL 1 and PTL 2 describe "an atmosphere investigation method as a method for measuring the kind and concentration of a corrosive gas present in an environmental atmosphere, characterized in that regarding five kinds of metal pieces of copper, silver, aluminum, iron, and 52 alloy, a calibration curve of an X ray microanalyzer showing correlative relationship between corrosive gas concentration and X-ray intensity of a corrosion product generated by exposure for a prescribed period is determined in advance and the five kinds of metal pieces are left in an investigated environmental atmosphere for a prescribed period, the kind of corrosive gas is estimated from a corrosion condition, then the X-ray intensity of a corrosive gas component of the corrosion product is calculated by the X-ray microanalyzer, and the gas concentration is calculated by comparison with the calibration curve".

Furthermore, as an approach to quantifying the corrosiveness of an environment according to the thickness of corrosion product of metal, PTL 3 describes "an environment evaluation method characterized in that thin films of two or more different materials including a metal or alloy thereof or compound thereof are formed on one insulating substrate sequentially, the thin films have different physical and/or chemical properties and constitute detecting elements for detecting a plurality of gas components in an environment by using differences in the physical and/or chemical properties of the thin films, and the environment is evaluated by detecting change in the physical and/or chemical properties of the materials of the elements, and an environment evaluation device which uses the method".

Furthermore, as a device which quantifies the corrosiveness of an environment according to the thickness of corrosion product of metal, PTL 4 describes "a corrosive environment monitoring device characterized by having a first and a second corrosive environment monitoring device including a passage structure with one opening, a transparent substrate formed as one wall face of the passage structure parallel to a diffusion direction of a corrosive substance from the opening, and a thin metal film formed on the transparent substrate, in which the first and the second corrosive environment monitoring device can measure the shape and size of an area whose color tone has changed due to a corrosion product of the metal thin film left in a measured environment for a prescribed period, through the transparent substrate, and the metal thin film of the first corrosive environment monitoring device is made of a prescribed material and the metal thin film of the second corrosive environment monitoring device is made of a material different from the material of the metal thin film of the first corrosive environment monitoring device.

### Citation List

### Patent Literature

PTL 1: Japanese Patent Application Laid-Open No. Sho 63-305232
PTL 2: Japanese Patent Application Laid-Open No. Hei 6-117976
PTL 3: Japanese Patent Application Laid-Open No. 2003-294606
PTL 4: Japanese Patent No. 5798955

### Summary of Invention

### Technical Problem

As described above, various methods for evaluating the corrosiveness of the installation environment of an electrical/electronic device have been proposed. For example, in the atmosphere investigation methods in PTL 1 and PTL 2, after being left in the installation environmental atmosphere of an electrical/electronic device for a prescribed period, a metal plate is collected and brought back and the gas adhering to the metal plate is analyzed using an analyzer such as a fluorescent X-ray spectrometer. For this reason, these methods have a problem that it is difficult to analyze the metal plate and diagnose the corrosiveness of the environment quantitatively on the spot in the installation environment of the electrical/electronic device. In addition, another problem is that it is difficult to install these atmosphere investigation devices in a densely packaged electrical/electronic device.

Furthermore, for example, in the environment evaluation method and the environment evaluation device using the method in PTL 3, the optical reflectance and optical transmittance of the thin film element and change of the electric resistance element are detected and converted into electric signals and thus a power supply to drive the electric circuit is required. When used in the customer environment, there arises a problem that due to the customer's circumstances it may be impossible to prepare a power supply and thus it may be difficult to use an environment measuring device.

Furthermore, for example, the corrosive environment monitoring device in PTL 4 is a corrosive environment monitoring device which includes a passage structure with one opening, a transparent substrate formed as one wall face of the passage structure parallel to the diffusion direction of a corrosive substance from the opening, and a metal thin film formed on the transparent substrate, and when the metal plate is exposed, can calculate the thickness of corrosion from the length of the discolored area of the metal thin film. In a relatively clean environment like a data center, a problem is that in the case of exposure for one month as specified in the ASHRA guidelines, the discolored area of the metal thin film is small and short and thus it is difficult to evaluate the degree of corrosion of the metal in accordance with the ASHRA guidelines (allowable silver corrosion thickness not more than 20 nm, copper corrosion thickness not more than 30 nm).

If the corrosive environment monitoring device designed for a relatively clean environment as described in PTL 4 is used in a relatively polluted environment, a problem is that it is difficult to measure the degree of corrosion because the metal thin film is entirely discolored when exposed for one year as specified in the ISO11844-1 standards.

In addition, the problem common to these patent documents PTL 1, 2, 3, and 4 is that any of these corrosive environment monitoring devices has only one sensing part and hardly corrects corrosion data which varies largely.

Because of the above circumstances, the present invention has an object to provide a corrosive environment monitoring device which can measure the degree of corrosion of metal in a tiny space inside an electronic device housing as an object of diagnosis on the spot for a short to long term without the need for a special analyzer and without the need for a power source such as a commercial power supply or battery.

### Solution to Problem

In order to solve the above problem, the present invention provides a corrosive environment monitoring device with the features of claim 1.

### Advantageous Effects of Invention

According to the present invention, it is possible to measure the degree of corrosion of metal in a tiny space inside an electronic device housing as an object of diagnosis on the spot for a short to long term without the need for a special analyzer and without the need for a power source such as a commercial power supply or battery.

For example, according to an example of the present invention, corrosiveness in a relatively clean environment after a short term or one month of exposure can be diagnosed in accordance with the ASHRA guidelines and also corrosiveness in a relatively polluted environment after a long term or one year of exposure can be diagnosed in accordance with the ISO11844-1 standards.

### Brief Description of Drawings

Figure 1 is a perspective view of the corrosive environment monitoring device according to Example 1, not within the scope of the present invention.
Figure 2 is a top view of the corrosive environment monitoring device according to Example 1.
Figure 3 is a sectional view of the corrosive environment monitoring device, taken along the line A-A of Figure 2.
Figure 4 is a sectional view of the corrosive environment monitoring device, taken along the line B-B of Figure 2.
Figure 5 is a top view showing the corrosion condition of the metal thin film after exposure of the corrosive environment monitoring device in Example 1.
Figure 6 is a sectional view of the corrosive environment monitoring device, taken along the line A-A of Figure 5.
Figure 7 is a sectional view of the corrosive environment monitoring device, taken along the line B-B of Figure 5.
Figure 8 is a view which shows the relation between a wider sensor and a narrower sensor in the length of the discolored area of the metal thin film and corrosion thickness.
Figure 9 is a view which shows the relation between the ratio of the length of the discolored area of the narrower metal thin film to the length of the discolored area of the wider metal thin film and corrosion thickness.
Figure 10 is a perspective view of the conventional corrosive environment monitoring device.
Figure 11 is a top view of the conventional corrosive environment monitoring device.
Figure 12 is a sectional view of the corrosive environment monitoring device, taken along the line B-B of Figure 11.
Figure 13 is a top view of the conventional corrosive environment monitoring device which shows the corrosion condition of the metal thin film after exposure.
Figure 14 is a sectional view of the conventional corrosive environment monitoring device, taken along the line B-B of Figure 11, which shows the corrosion condition of the metal thin film after exposure.
Figure 15 is a view which shows an example of the relation between the length of the discolored area of the metal thin film and corrosion thickness in the conventional corrosive environment monitoring device.
Figure 16 is a perspective view of the corrosive environment monitoring device according to Example 2, in accordance with an embodiment of the present invention.
Figure 17 is a top view of the corrosive environment monitoring device according to Example 2.
Figures 18 is a top view of the corrosive environment monitoring device in Example 2 which shows the corrosion condition of the metal thin film after exposure.
Figure 19 is a view which shows the relation between the length of the discolored area of the metal thin film and corrosion thickness in Example 2.
Figure 20 is a view which shows the relation between the ratio of the length of the discolored area in the high opening to the length of the discolored area in the low opening and corrosion thickness.
Figure 21 is a perspective view of the corrosive environment monitoring device according to Example 3, in accordance with another embodiment of the present invention.
Figure 22 is a perspective view of the corrosive environment monitoring device according to Example, not within the scope of the present invention.

### Description of Embodiments

Next, referring to the drawings, examples of corrosive environment monitoring devices which measure the degree of corrosion due to a corrosive substance present mainly in the installation environment of an electrical/electronic device will be described.

In the description of an example, for understanding of the features of this structure, it is convenient to give an explanation by comparison with the conventional structure. Therefore, in the explanation given below, the structure of the conventional corrosive environment monitoring device will be first described.

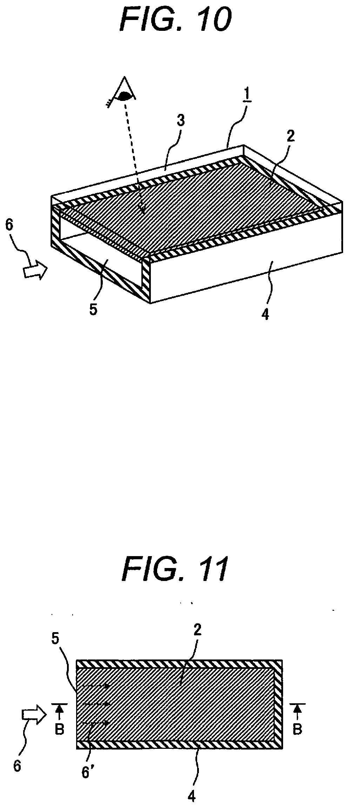

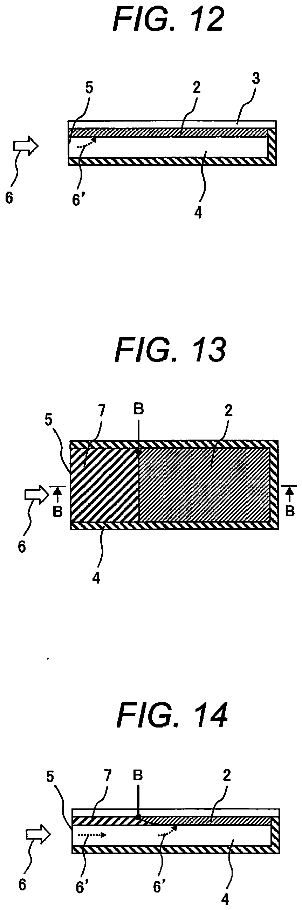

First, an example of the structure of the conventional corrosive environment monitoring device is explained referring to Figures 10 to 12. Figure 10 is a perspective view of the conventional corrosive environment monitoring device, Figure 11 is a top view of the conventional corrosive environment monitoring device, and Figure 12 is a sectional view taken along the line B-B of Figure 11.

As shown in the perspective view of Figure 10, in the corrosive environment monitoring device 1, a passage structure 4 with one end closed and the other end as an opening 5 is formed in a box-shaped center area. Among the side faces, top and bottom faces, and back face of the passage structure 4, the top face is formed as a metal thin film 2 and the metal thin film 2 is covered by a transparent substrate 3. Consequently, the degree of corrosion of the metal thin film 2 can be visually checked from above the corrosive environment monitoring device 1.

According to this structure, the metal thin film 2 constitutes a sensor part and is attached to one wall face in the passage structure 4 with the opening 5 (top face in the case of Figure 10). The metal thin film 2 is attached so that its film surface is on the passage structure 4 side and the transparent substrate 3 is on the surrounding atmosphere side, namely the metal thin film 2 can be observed through the transparent substrate 3 from the surrounding atmosphere side (from above in Figure 10). For the metal thin film 2, a metal which is different in color tone between the metal and a corrosion product, such as aluminum, iron, and zinc, may be used in addition to copper and silver which are used for corrosive environment monitoring of the installation environment of an electrical/electronic device.

When the conventional corrosive environment monitoring device 1 is exposed in an environment, a corrosive substance 6 present in the environment enters the passage structure 4 through the opening 5 and corrodes the metal thin film 2. In this case, the passage structure 4 has a role to control the speed at which the metal thin film 2 as the sensor part is corroded by the corrosive substance 6. The passage structure 4 has one opening 5 (on the left side of the passage structure shown in Figures 11 and 12) and no opening is provided on the right side of the passage structure which is isolated from the surrounding environment. Here, corrosive substances include a corrosive gas, flying sea salt, and dust, but a corrosive gas is hereinafter described as representative of the corrosive substances.

According to the top view of Figure 11, since the closure of the one end (right in the figure) prevents the passage structure 4 from functioning as a ventilation flue, the corrosive gas 6 present in the environment gradually enters the passage structure 4 through the opening 5 as time elapses. In this figure, 6' represents the corrosive gas 6 which has entered the passage structure 4 and according to Figure 12 which shows the cross section taken along the line B-B of Figure 11, the corrosive substance 6' which has entered the inside contacts the metal thin film 2 near the opening 5.

Next, how the conventional corrosive environment monitoring device 1 quantifies the corrosive gas 6' near the opening 5 which has entered the passage structure 4 and has diffused will be explained.

In the corrosive environment monitoring device 1 in Figure 10, diffusion of the corrosive gas 6' is limited to the direction from left on the paper surface to control corrosion on the corrosive environment monitoring device 1. When the distance from the opening 5 is shorter, the concentration flux is larger, so the amount of corrosion is larger in an area of the metal thin film 2 nearer to the opening 5 or on the left side. This behavior is described, for example, in "ioh-gas-kankyo deno gin no fushoku-sokudo no suitei (estimation of corrosion speed of silver in a sulfur gas environment)", Zairyo-to-Kankyo Vol. 56, pp. 265-271 (2007). This document demonstrates by experimentation with a metal plate and analysis that as the distance from the source of corrosive gas 6' increases, the corrosion speed decreases. By using this method, corrosion behavior of the corrosive environment monitoring device can be analyzed.

Since the metal thin film 2 is used here, the progress of corrosion stops in an area where the corrosion thickness is equal to the thickness of the metal thin film 2 (area where the metal thin film 2 has corroded up to the boundary face with the transparent substrate 3). When this area of the metal thin film 2 is observed from the transparent substrate 3 side, it can be confirmed that the metal color tone of the metal thin film 2 has changed to the color tone of a corrosion product.

The corrosion condition of the metal thin film 2 after exposure of the corrosive environment monitoring device 1 is shown in the top view of Figure 13 and the sectional view of Figure 14, taken along the line B-B. According to Figure 13, corrosion does not progress further in the area where due to the progress of corrosion of the metal thin film 2, the corrosion thickness becomes equal to the thickness of the thin film (area where the metal thin film has corroded up to the boundary face with the substrate). The corrosive gas 6 present in the environment continues to diffuse from left or near the opening 5 and further corrodes the metal thin film on the right. As shown in the top view of Figure 13 and the sectional view of Figure 14, taken along the line B-B, the area 7 of the metal thin film 2 which is corroded entirely in the film thickness direction (distance from the left end to point B in the figure) spreads to the right as the exposure time elapses.

In the ASHRAE guidelines, corrosiveness of an environment is diagnosed according to the thickness of a corrosion product of metal exposed for one month. The thickness of the corrosion product of the exposed metal can be calculated by the prior art from the length of the metal thin film area 7 corroded entirely in the film thickness direction in the corrosive environment monitoring device. The extension speed of the length of the metal thin film area 7 corroded entirely in the film thickness direction depends on the thickness of the metal thin film and the height of the opening. The extension speed is higher when the metal thin film is thinner and the height of the opening is larger.

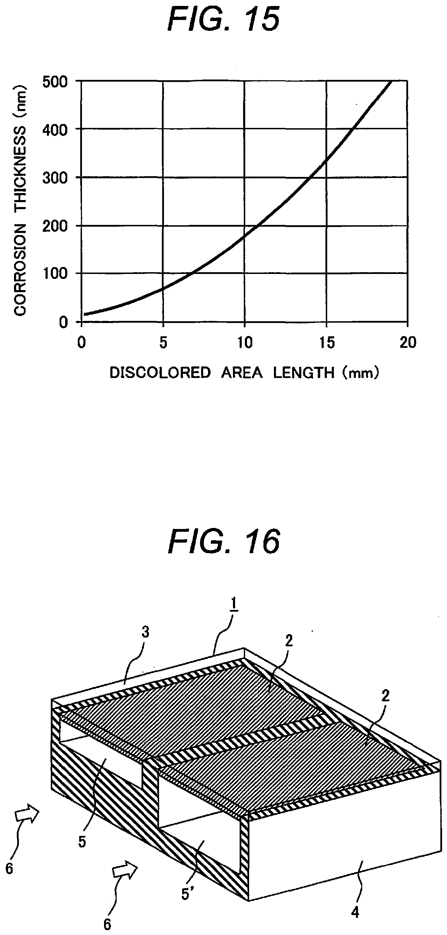

Figure 15 shows an example of the relation between the length of the area 7 of the metal thin film 2 which is corroded entirely in the film thickness direction and the thickness of the corrosion product of the exposed metal plate in the corrosive environment monitoring device 1. In Figure 15, the horizontal axis represents the length of the discolored area 7 and the vertical axis represents the thickness of the corrosion product of the exposed metal plate. Specifically, the figure shows characteristics when the silver thin film thickness is 20 nm, the passage height is 2 mm, the passage width is 5 mm, and the passage length is 20 mm.

These characteristics indicate that the gradient of the curve is relatively large and even when the length of the corroded area 7 of the metal thin film slightly increases, the thickness of the corrosion product of the exposed metal plate increases largely (measuring accuracy is low). In order to calculate the thickness of the corrosion product of the exposed metal plate accurately, a corrosive environment monitoring device in which the gradient of the curve is small (even when the length of the corroded area 7 of the metal thin film increases largely, the thickness of the corrosion product of the exposed metal plate increases slightly) is required.

In the ASHRAE guidelines, corrosiveness of an environment is diagnosed according to the thickness of a corrosion product of metal exposed for one month and in the ISO11844-1 standards, corrosiveness of an environment is diagnosed according to the thickness of a corrosion product of metal exposed for one year.

Therefore, a corrosive environment monitoring device which can be applied to both the standards is needed.

### <Example 1>

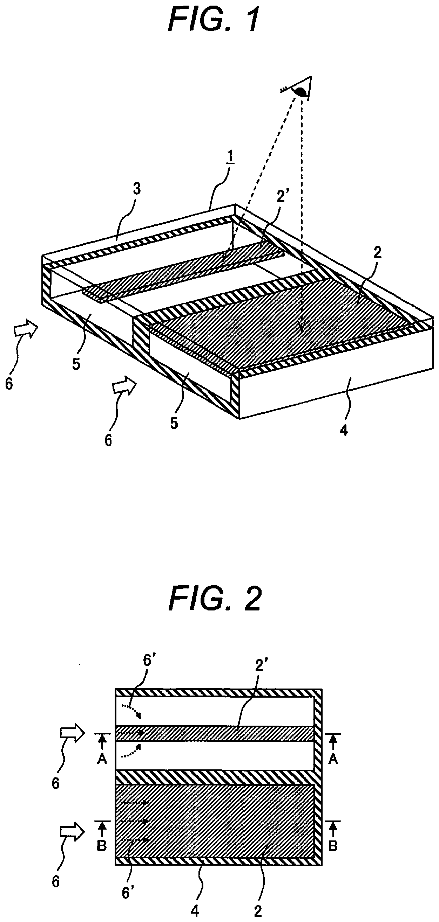

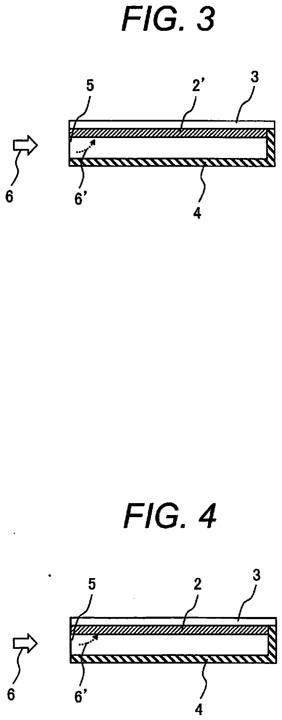

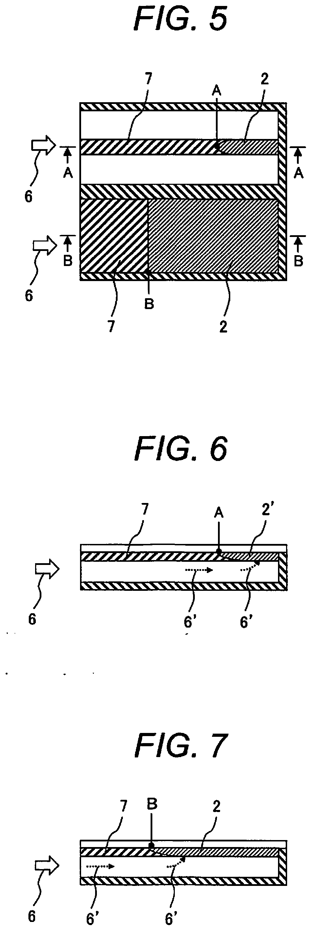

Now that the structure and problem of the conventional corrosive environment monitoring device have been clarified, the structure of a corrosive environment monitoring device not within the scope of the present invention is described below. Figures 1 to 7 show an example of the structure and the effect of the corrosive environment monitoring device according to Example 1 of the present invention. Figure 1 is a perspective view which shows the general structure of the corrosive environment monitoring device according to Example 1, Figure 2 is a top view thereof, Figure 3 is a sectional view taken along the line A-A of Figure 2, and Figure 4 is a sectional view taken along the line B-B of Figure 2. Figures 5, 6, and 7 are a top view showing the corrosion condition of the metal thin film after exposure of the corrosive environment monitoring device in Example 1, a sectional view of the corrosive environment monitoring device, taken along the line A-A of Figure 5, and a sectional view of the corrosive environment monitoring device, taken along the line B-B of Figure 5, respectively.

As apparent from comparison of the corrosive environment monitoring device 1 according to Example 1 in Figure 1 with the conventional corrosive environment monitoring device 1 in Figure 10, the corrosive environment monitoring device 1 in Example 1 is provided with a plurality of sets of corrosive environment monitoring parts (two sets in Figure 1). In addition, the corrosion detection conditions in the corrosive environment monitoring parts are differentiated. In Example 1 in Figure 1, the metal thin film 2 as a sensor part includes a first metal thin film 2 which has the same condition as in Figure 10 (the top face of the passage structure 4 is entirely covered by a metal thin film) and a second metal thin film 2' which has a different condition (the metal thin film lies on part of the top face of the passage structure 4 in the depth direction). The other conditions (the structure of the passage structure 4, corrosive gas 6, etc.) are the same.

Next, an explanation will be given more concretely. The corrosive environment monitoring device 1 has sensor parts as the metal thin films 2 and 2' attached onto the transparent substrate 3. The metal thin film 2 has the same width as the passage structure 4 and the metal thin film 2' has a smaller width than the passage structure 4.

In the case of the structure in Example 1, as shown in the top view of Figure 2, regarding the flow of corrosive gas 6', whereas in the passage structure of the metal thin film 2 the corrosive gas 6' diffuses in the direction parallel to the passage structure and reacts with the metal thin film, in the passage structure of the metal thin film 2' the corrosive gas 6' diffuses not only in the direction parallel to the passage structure but also in the perpendicular direction (diffuses from the side faces of the metal thin film 2).

Therefore, as shown in Figure 5 which indicates the corrosion condition of the metal thin film after exposure of the corrosive environment monitoring device in Example 1, even though the metal thin films have the same thickness, the result of corrosion is that the length of the discolored area of the metal thin film 2' (distance from the left end to point A in Figure 5) is larger than the length of the discolored area of the metal thin film 2 (distance from the left end to point B in Figure 5). This is explained below in more detail.

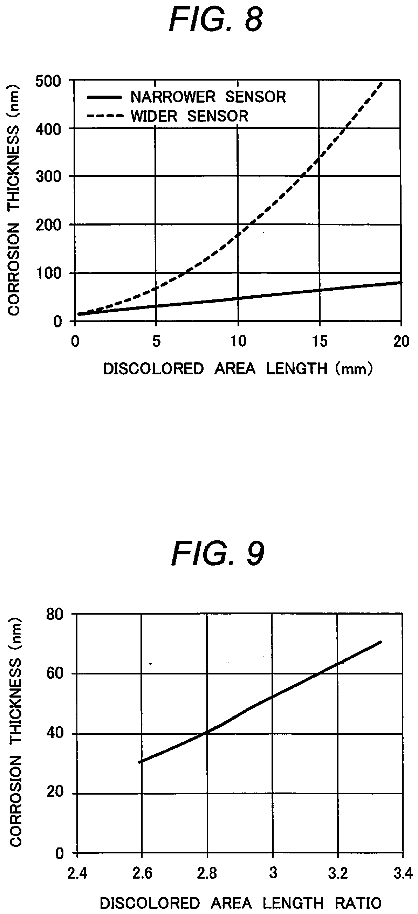

Like Figure 15, Figure 8 shows an example of the relation between the length of the area 7 of the metal thin film 2 which is corroded entirely in the film thickness direction and the thickness of the corrosion product of the exposed metal plate in the corrosive environment monitoring device 1, though the figure compares the wider sensor (metal thin film 2) and the narrower sensor (metal thin film 2') to show the difference in characteristics.

The example in Figure 8 shows the measurement result in the case that the narrower metal thin film 2' has a silver thin film width of 1 mm, a silver thin film thickness of 20 nm, a passage height of 2 mm, a passage width of 20 mm, and a passage length of 20 mm, and the wider metal thin film 2 has a silver thin film width of 5 mm, a silver thin film thickness of 20 nm, a passage height of 2 mm, a passage width of 5 mm, and a passage length of 20 mm. When the metal thin films with different widths are used in this way, the narrower metal thin film 2' can be used to calculate the thickness of the corrosion product of the metal exposed for one month in accordance with the ASHRAE guidelines and the wider metal thin film 2 can be used to calculate the thickness of the corrosion product of the metal exposed for one year in accordance with the ISO11844-1 standards.

From the relation shown in Figure 8, when the metal thin film 2 is made to have a smaller width than the passage structure 4, it is desirable that the width of the narrower metal thin film 2' be not more than one fifth of the width of the wider metal thin film 2. Consequently, both the degree of corrosion of the metal exposed for one month according to the ASHRAE guidelines and the degree of corrosion of the metal exposed for one year according to the ISO11844-1 standards can be measured.

Thus, in the corrosive environment monitoring device 1 according to Example 1, since two types of metal thin films 2 and 2' are used, the thickness of the corrosion product can be calculated by two different methods to take the average. Furthermore, by calculating the ratio of the length of the discolored area of the narrower metal thin film to the length of the discolored area of the wider metal thin film, the thickness of the corrosion product can be calculated from the ratio. Furthermore, in the corrosive environment monitoring device 1 according to Example 1, the thickness of the corrosion product can be estimated accurately by calculating the thickness of the corrosion product by three different methods and taking the average.

Here, how to calculate the thickness of the corrosion product from the ratio of the length of the discolored area 7 of the narrower metal thin film 2' to the length of the discolored area 7 of the wider metal thin film 2 is explained. As shown in Figure 8, it has been found that the relation between the length of the discolored area of the metal thin film and corrosion thickness is linear when the width of the metal thin film is smaller than the width of the passage structure and conversely, the relation is nonlinear when the width of the metal thin film is equal to the width of the passage structure. By using the difference in linearity, the thickness of the corrosion product can be calculated from the ratio of the length of the discolored area of the narrower metal thin film to the length of the discolored area of the wider metal thin film.

Figure 9 shows an example of the relation between the ratio of the length of the discolored area of the narrower metal thin film to the length of the discolored area of the wider metal thin film as calculated from Figure 8 and corrosion thickness. The ratio of the length of the discolored area and corrosion thickness have a good linear relation in the range where the absolute amount of corrosion thickness is small. This method is a desirable method for estimating the thickness of the corrosion product accurately.

### <Example 2>

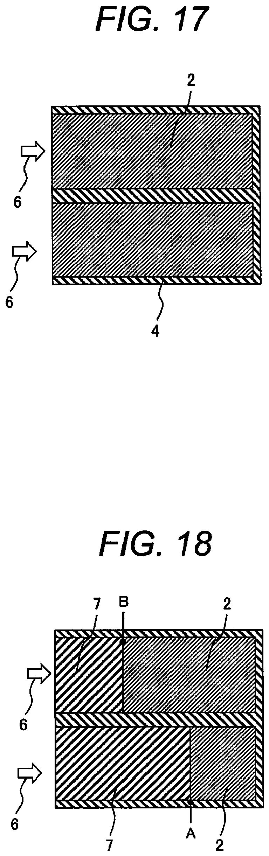

Figures 16 and 17 show an example of the structure of the corrosive environment monitoring device according to Example 2, an embodiment of the present invention. Figure 16 is a perspective view and Figure 17 is a top view.

As apparent from comparison of the corrosive environment monitoring device 1 according to Example 2 of the present invention in Figure 16 with the corrosive environment monitoring device 1 in Example 1 in Figure 1, they are the same in having a plurality of sets of metal thin films with the same structure (two sets in Figure 16), but as the corrosion detection conditions in the corrosive environment monitoring parts, the passage structure 4, therefore the opening 5, is different in size.

An explanation is given below more concretely. In the corrosive environment monitoring device 1, sensor parts as two sets of metal thin films 2 attached onto the transparent substrate 3 are disposed. Both the metal thin films 2 have the same width as the passage structure 4. However, the openings 5 and 5' of the passage structure 4 are different in height.

In this case, the corrosion condition of the metal thin film after exposure of the corrosive environment monitoring device 1 is shown in the top view of Figure 18. The corrosive gas 6 diffuses more inward in the passage of the opening 5' than in the passage of the opening 5 because the opening 5' is larger. Therefore, even though the metal thin films 2 are the same in thickness, the measurement result is that the length of the discolored area of the opening 5' (distance from the left end to point A in Figure 18) is larger than the length of the discolored area of the opening 5 (distance from the left end to point B in Figure 18).

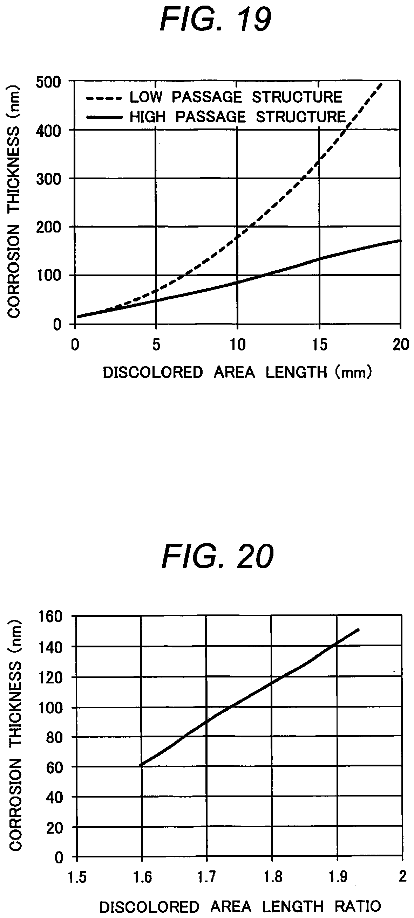

Figure 19 shows an example of the relation between the length of the discolored area of the metal thin film and corrosion thickness. This is the result of measurement in which the high passage structure has a silver thin film thickness of 20 nm, a passage height of 10 mm, a passage width of 5 mm, and a passage length of 20 mm and the low passage structure has a silver thin film thickness of 20 nm, a passage height of 2 mm, a passage width of 5 mm and a passage length of 20 mm. When the openings with different heights are used in this way, the high opening 5' can be used to calculate the thickness of the corrosion product of the metal exposed for one month in accordance with the ASHRAE guidelines and the low opening 5 can be used to calculate the thickness of the corrosion product of the metal exposed for one year in accordance with the ISO11844-1 standards.

In the corrosive environment monitoring device 1 in Example 2, two types of openings are used and thus the thickness of the corrosion product can be calculated by two different methods to take the average. Furthermore, since two types of metal thin films are used, the ratio of the length of the discolored area of the high opening (narrower opening) to the length of the discolored area of the low opening (wider opening) can be calculated to determine the thickness of the corrosion product from this ratio. In addition, in the corrosive environment monitoring device 1 in Example 2, the thickness of the corrosion product can be estimated accurately by calculating the corrosion product thicknesses by three different methods and taking the average.

Here, as an explanation of the method for calculating the thickness of the corrosion product from the ratio of the length of the discolored area of the low opening to the length of the discolored area of the high opening, the reason for this is the same as in the abovementioned method with the narrower metal thin film and wider metal thin film. As shown in Figure 19, it has been found that the relation between the length of the discolored area of the metal thin film and corrosion thickness is linear when the opening is higher and conversely the relation is nonlinear when the opening is lower. By using this difference in linearity, the thickness of the corrosion product can be calculated from the ratio of the length of the discolored area of the high opening to the length of the discolored area of the low opening.

Figure 20 shows an example of the relation between the ratio of the length of the discolored area of the metal thin film of the high opening to the length of the discolored area of the metal thin film of the low opening as calculated from Figure 19 and corrosion thickness. According to this, the ratio of the length of the discolored area and corrosion thickness have a good linear relation in the range where the absolute amount of corrosion thickness is small. This method is a desirable method for estimating the thickness of the corrosion product accurately.

### <Example 3>

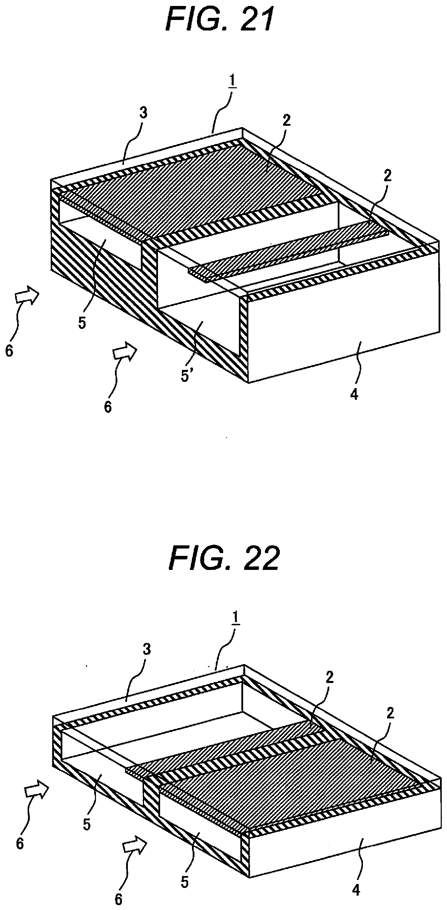

Figure 21 shows an example of the structure of the corrosive environment monitoring device according to Example 3, another embodiment of the present invention. Figure 21 shows a method which combines the relation between the wider and narrower metal thin films in Example 1 and the relation between the high and low openings in Example 2.

Here, the passage structure with openings different in height in Example 2 and metal thin films with different widths are combined to constitute a device which includes a sensing part with the narrower metal thin film attached to the high opening passage and a sensing part with the wider metal thin film attached to the low opening passage.

Consequently, the good linear relation between the ratio of the length of the discolored area and corrosion thickness can be maintained and further the sensing part with the wider metal thin film attached to the low opening passage can be used to calculate the thickness of the corrosion product of the metal exposed for one month in accordance with the ASHRAE guidelines and the sensing part with the wider metal thin film attached to the low opening passage can be used to calculate the thickness of the corrosion product of the metal exposed for one year in accordance with the ISO11844-1 standards.

### <Example 4>

Figure 22 shows an example of the structure of the corrosive environment monitoring device according to Example 4, not within the scope of the present invention. Figure 22 shows a method which combines the relation between the wider and narrower metal thin films in Example 1 and the relation between the high and low openings in Example 2.

In Example 4, the corrosive environment monitoring device 1 includes sensor parts constituted by metal thin films 2 and 2' attached onto the transparent substrate 3. The metal thin film 2 has the same width as the passage structure 4 and the metal thin film 2' has a smaller width than the passage structure 4. The metal thin film 2' is attached in a manner to contact the side wall face of the opening.

Consequently, as compared with the structure with the metal thin film 2 located in the center of the opening, attachment in a manner to contact the side wall face can bring about the same effect as a structure having a substantially twice larger width and can contribute to space saving of the corrosive environment monitoring device.

### Reference Signs List

1... corrosive environment monitoring device,
2, 2'... metal thin film,
3... transparent substrate ,
4... passage structure,
5... opening,
6, 6'... corrosive gas,
7... metal thin film area corroded entirely in the film thickness direction

## Claims

1. A corrosive environment monitoring device,
comprising a sensor part in which a box-shaped passage structure (4) with one end closed, and
wherein the passage structure has a plurality of openings as another end, and each of the openings has a metal thin film (2) located on one face of a top, bottom or side face of the particular opening and the metal thin film (2) is covered by a transparent substrate (3),
wherein the corrosive environment monitoring device (1) includes a plurality of corrosive environment monitoring parts located adjacent to the plurality of openings,
**characterized in that** the openings are different in size such that corrosion detection conditions of the metal thin film (2) in the plural corrosive environment monitoring parts are differentiated.

2. The corrosive environment monitoring device (1) according to Claim 1, wherein in order to differentiate the corrosion detection conditions of the metal thin film (2), a width of the metal thin film (2) in a depth direction of the passage structure (4) is differentiated.

3. The corrosive environment monitoring device (1) according to Claim 2, wherein, as for widths of the metal thin films in the corrosive environment monitoring parts, a metal thin film (2) ratio thereof is not more than one fifth.

4. The corrosive environment monitoring device (1) according to Claim 1, wherein, as for the opening areas of the passage structure (4) in the corrosive environment monitoring parts, an opening area ratio thereof is not more than one fifth.

5. The corrosive environment monitoring device (1) according to any one of Claims 1 to 4, wherein a material of the metal thin film (2) includes at least one of copper, silver, gold plating, iron, iron nickel alloy, aluminum or zinc.

## Patentansprüche

1. Vorrichtung zum Überwachen einer korrosiven Umgebung, die ein Sensorteil umfasst, in dem eine kastenförmige Kanalstruktur (4) mit einem geschlossenen Ende gebildet ist, und
wobei die Kanalstruktur als ein anderes Ende mehrere Öffnungen aufweist und jede der Öffnungen eine Metalldünnschicht (2) aufweist, die sich auf einer oberen Fläche, unteren oder seitlichen Fläche der bestimmten Öffnung befindet, und die Metalldünnschicht (2) durch ein transparentes Substrat (3) bedeckt ist,
wobei die Vorrichtung (1) zum Überwachen einer korrosiven Umgebung mehrere Teile zum Überwachen einer korrosiven Umgebung enthält, die sich neben den mehreren Öffnungen befinden,
**dadurch gekennzeichnet, dass** sich die Öffnungen in der Größe unterscheiden, so dass Korrosionsdetektionsbedingungen der Metalldünnschicht (2) in den mehreren Teilen zum Überwachen einer korrosiven Umgebung differenziert werden.

2. Vorrichtung (1) zum Überwachen einer korrosiven Umgebung nach Anspruch 1, wobei um die Korrosionsdetektionsbedingungen der Metalldünnschicht (2) zu differenzieren, eine Breite der Metalldünnschicht (2) in einer Tiefenrichtung der Kanalstruktur (4) differenziert wird.

3. Vorrichtung (1) zum Überwachen einer korrosiven Umgebung nach Anspruch 2, wobei in Bezug auf die Breiten der Metalldünnschichten in den Teilen zum Überwachen einer korrosiven Umgebung ein Verhältnis der Metalldünnschichten (2) davon nicht mehr als ein Fünftel beträgt.

4. Vorrichtung (1) zum Überwachen einer korrosiven Umgebung nach Anspruch 1, wobei in Bezug auf die Öffnungsflächen der Kanalstruktur (4) in den Teilen zum Überwachen einer korrosiven Umgebung ein Öffnungsflächenverhältnis davon nicht mehr als ein Fünftel beträgt.

5. Vorrichtung (1) zum Überwachen einer korrosiven Umgebung nach einem der Ansprüche 1 bis 4, wobei ein Material der Metalldünnschicht (2) Kupfer, Silber, Goldauflage, Eisen, Eisennickellegierung, Aluminium und/oder Zink enthält.

## Revendications

1. Dispositif de surveillance d'environnement corrosif, comprenant une partie capteur dans laquelle est prévue une structure de passage en forme de boîte (4) avec une extrémité fermée, et
dans lequel la structure de passage a une pluralité d'ouvertures à une autre extrémité, et chacune des ouvertures a un film mince en métal (2) situé sur une face d'une face supérieure, inférieure ou latérale de l'ouverture particulière et le film mince en métal (2) est couvert par un substrat transparent (3),
dans lequel le dispositif de surveillance d'environnement corrosif (1) inclut une pluralité de parties de surveillance d'environnement corrosif situées de manière adjacente à la pluralité d'ouvertures,
**caractérisé en ce que** les ouvertures sont différentes en taille de sorte que des conditions de détection de corrosion du film mince en métal (2) dans la pluralité de parties de surveillance d'environnement corrosif sont différenciées.

2. Dispositif de surveillance d'environnement corrosif (1) selon la revendication 1, dans lequel, afin de différencier les conditions de détection de corrosion du film mince en métal (2), une largeur du film mince en métal (2) dans une direction en profondeur de la structure de passage (4) est différenciée.

3. Dispositif de surveillance d'environnement corrosif (1) selon la revendication 2, dans lequel, pour ce qui concerne les largeurs des films minces en métal dans les parties de surveillance d'environnement corrosif, un rapport de film mince en métal (2) de celles-ci n'est pas supérieur à un cinquième.

4. Dispositif de surveillance d'environnement corrosif (1) selon la revendication 1, dans lequel, pour ce qui concerne les aires d'ouverture de la structure de passage (4) dans les parties de surveillance d'environnement corrosif, un rapport d'aire d'ouverture de celles-ci n'est pas supérieur à un cinquième.

5. Dispositif de surveillance d'environnement corrosif (1) selon l'une quelconque des revendications 1 à 4, dans lequel un matériau du film mince en métal (2) inclut au moins un élément parmi : cuivre, argent, placage d'or, fer, alliage fer-nickel, aluminium ou zinc.
